# EUROPEAN PATENT APPLICATION

(11) **EP 2 960 156 A1**
(43) Date of publication of application: **30.12.2015**
(21) Application number: 15170043.2
(22) Date of filing: 01.06.2015
(51) Int. Cl.: B64D 1/08

(54) **AIRDROP PLATFORMS**

(30) Priority: 26.06.2014 GB 201411361; 11.07.2014 US 201414329102
(71) Applicant: Airborne Systems Limited, Llangeinor Bridgend Mid Glamorgan CF32 8PL (GB)
(72) Inventor: JONES, Martyn Philip, Bridgend, Mid Glamorgan CF32 8PL (GB)
(74) Representative: Teesdale, Emily Catherine

(57) **Abstract**

An airdrop platform comprises a load-carrying base (10) having an upper surface and a lower surface. The upper surface includes attachment points (14) for one or more parachutes. The load-carrying base (10) is formed from a material, such as a glass fibre reinforced plastics material in the form of a grating, which is such as to flex to absorb energy on changes of the energy of the platform under the forces applied to the base (10) on parachute opening and on landing.

## Description

The invention relates to airdrop platforms.

An airdrop platform is used for carrying and restraining a load in an aircraft and then supporting the load as it is dropped from the aircraft under one or more parachutes. After deployment from the aircraft, the platform is subjected to two significant changes in kinetic energy. The first arises when the supporting parachute or parachutes opens. The platform is then rapidly decelerated and there is a significant change in the kinetic energy of the platform. The second arises when the platform lands on the ground. Again, the platform is subject to high deceleration and so subject to a large change in kinetic energy.

As a result, it is customary to build platforms that are sufficiently rigid that these changes in energy do not break or cause permanent deformation of the platform. The platforms may be made of aircraft grade aluminium designed to provide great strength and resistance to bending. The Type V platform of Natick design is constructed on this basis. The change in energy is dissipated through the load and the parachute as well as to the surrounding ground on landing but no significant amount of energy is absorbed by the platform.

As a result, such platforms are heavy and so more difficult to handle as well as being expensive. Additionally, the lack of compliance of the materials means that uneven loading can lead to permanent deformation.

According to the invention, there is provided an airdrop platform comprising a load-carrying base having an upper surface and a lower surface, the upper surface including attachment points for one or more parachutes, the load-carrying base being such as such as to flex to absorb energy on changes of the energy of the platform under the forces applied to the base on parachute opening and on landing.

Absorbing the loads encountered in use by the load-carrying member by flexing allows the load-carrying member to be light and inexpensive.

The following is a more detailed description of some embodiments of the invention, by way of example, reference being made to the accompanying drawings, in which:
Figure 1 is a plan view from above of an airdrop platform,
Figure 2 is an end elevation of the platform of Figure 1,
Figure 3 is a side elevation of the platform of Figures 1 and 2,
Figure 4 is a perspective view from beneath of the platform of Figures 1 to 3, and
Figure 5 is a view of the platform of Figures 1 to 4 suspended and carrying a load.

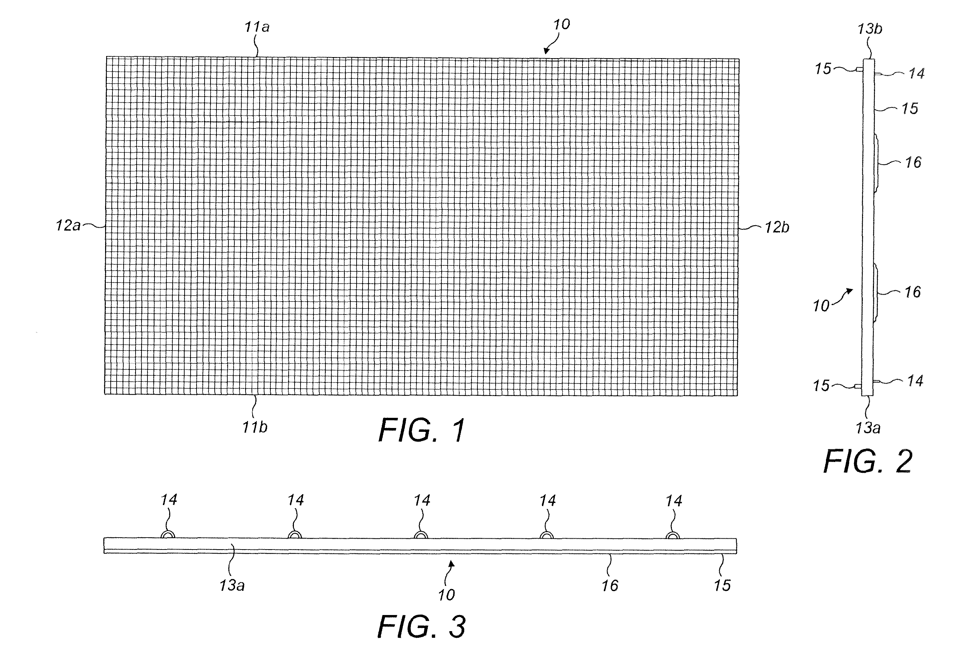

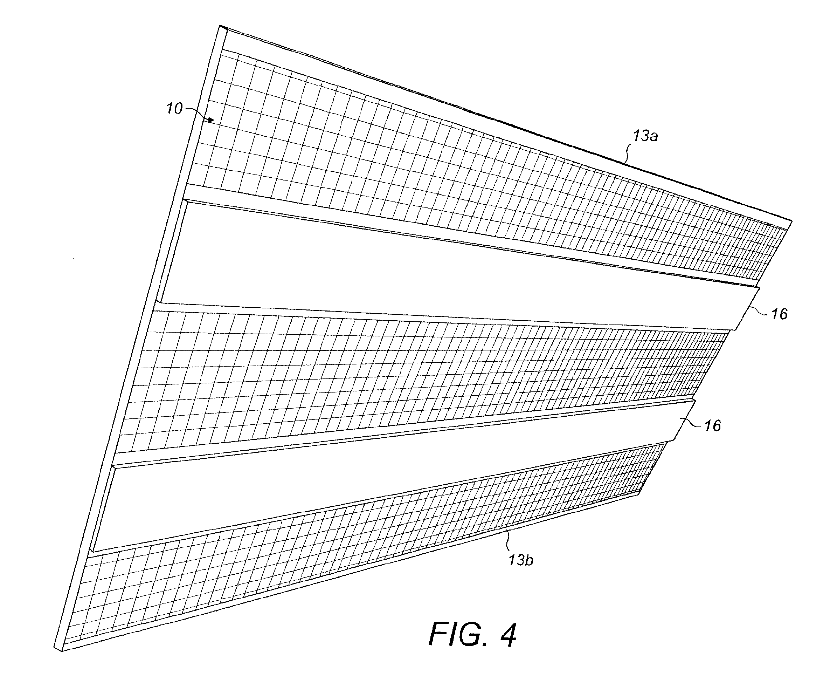

Referring first to Figures 1 to 3, the platform is formed from a rectangular load-carrying base 10. The base 10 has longer side edges 11a, 11b interconnected by shorter end edges 12a, 12b. The side edges 11a, 11b are received in respective metal channels 13a, 13b (see Figure 4) and each channel 13a, 13b includes attachment points 14 at spaced intervals along the channels 13a, 13b for connection to one or more parachutes. A lower surface 15 of the base 10 includes two spaced parallel longitudinally extending roller trays 16 providing an interface between the platform 10 with a cargo handling system within an aircraft facilitate loading of platforms into the aircraft. There may be more roller trays 16, for example four roller trays 16, dependant on aircraft roller positions. In addition, the metal channels 13a, 13b are designed to engage the cargo handling system to allow the platform to be located within an aircraft.

The base 10 is an energy-absorbing grating made from glass-fibre reinforced polyester. It consists of rovings of continuous glass fibres aligned bi-axially and saturated with polyester resin to form a square panel. The panel is topped with silicone grit to provide a non-slip finish, though this is not a critical feature of the design. As a result of this, loads applied to the base 10 and having a component in directions normal to the plane of the base 10 will cause local flexure of the base 10 relative to the remainder of the base 10.

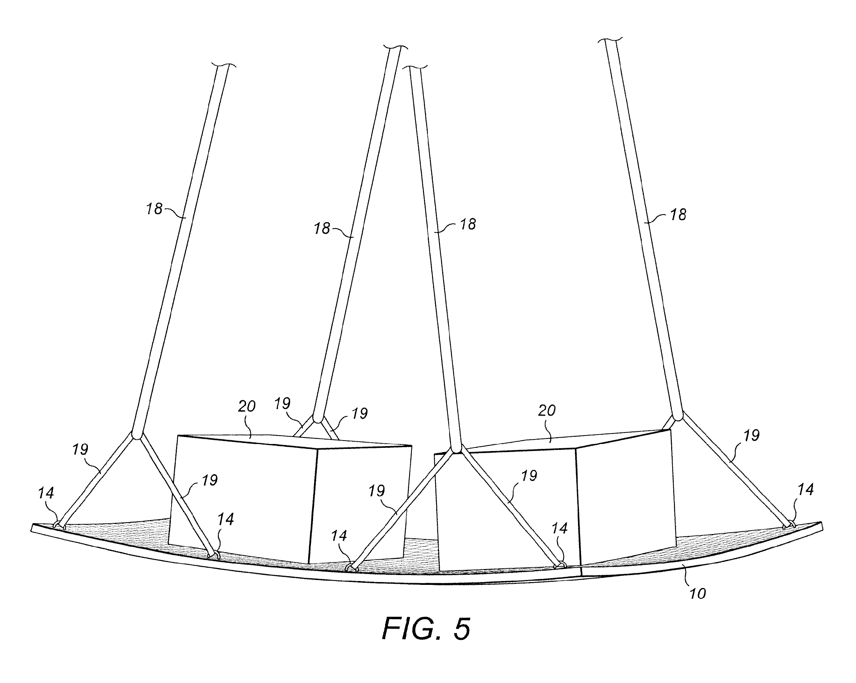

Referring next to Figure 5, this shows a platform of the kind described above with reference to Figures 1 to 4 of the drawings suspended from four slings 18, the confluence point of which is attached to a parachute (not shown). Each sling 18 is attached to a pair of spaced attachment points 14 by a pair of webbings 19. The base 10 carries a load 20 that, in this particular case, weighs 5 tonnes. As will be seen from Figure 5, the load applied to the attachment points 14 by the slings 18 to raise the base 10 from the ground causes the base 10 to flex under the load 20. The base 10 will similarly flex as the load from the slings 18 is first applied to the base 10 and will also flex as the load contacts the ground. This flexure absorbs some of the energy resulting from changes in the velocity of the platform.

In use, a platform of the kind described with reference to the drawings is for dropping a load from an aircraft. The load is mounted on the base 10 outside the aircraft and one or more packed parachutes are then attached to the base 10 at the confluence point of the four slings 18. The base 10 and load are then loaded onto the aircraft where the roller trays 16 interface with the rollers of the aircraft cargo handling system. The base 10 is then secured to the floor. When the aircraft reaches the desired drop point, the base 10 is released from the floor of the aircraft and exits a rear door of the aircraft. The parachute(s) open by the use of static lines and deploy. As the parachute(s) fill with air, they decelerate the platform rapidly via the attachment points 14 resulting in a rapid change in the kinetic energy of the platform. This change in energy is absorbed by the base 10 flexing so avoiding permanent damage to the base 10.

The platform and the load then descend under the control of the parachute(s) until they reach the ground. As the base lands on the ground, there will again be an abrupt change in the kinetic energy of the platform. These forces arising during such landing will cause the base 10 to flex so absorbing some of the energy change.

As a result, the base 10 can be made of an inexpensive lightweight material. This is important where the platform is for single use. It also allows easy storage of the platform prior to use.

Of course, the base 10 need not be as described above. It could be of any flexible material capable of absorbing energy by flexing under the decelerative forces from the parachute(s) and the ground. The base need not be a grid; it could be a sheet of uninterrupted material or sandwiched materials. The metal channels 13a, 13b need not have flat surfaces; they could be castellated to engage with the cargo handling system and provide restraint in all axes.

## Claims

1. An airdrop platform comprising a load-carrying base having an upper surface and a lower surface, the upper surface including attachment points for one or more parachutes, the load-carrying base being such as such as to flex to absorb energy on changes of the energy of the platform under the forces applied to the base on parachute opening and on landing.

2. A platform according to claim 1 wherein the base is formed from a wholly or principally from a plastics material.

3. A platform according to claim 2 wherein the base is formed from a reinforced plastics material.

4. A platform according to claim 2 wherein the plastics material is a polyester.

5. A platform according to claim 3 or claim 4 wherein the reinforcement is of glass fibre.

6. A platform according to claim 5 wherein the glass fibre is in the form of rovings.

7. A platform according to any one of claims 2 to 6 wherein the base is formed as a grating.

8. A platform according to any one of claims 1 to 7 wherein the base is rectangular.

9. A platform according to any one of claims 1 to 8 wherein the underside of the base is provided with one or more roller trays for co-operation with an aircraft cargo handling system.

10. A platform according to any one of claims 1 to 9 wherein the base includes side members for co-operation with an aircraft handling system to locate the base within an aircraft.

11. A platform according to any one of claims 1 to 10 wherein the load bearing surface is capable of supporting a load of at least 5 tonnes when suspended.

12. An airdrop platform substantially as hereinbefore described with reference to the accompanying drawings.
